# EUROPEAN PATENT APPLICATION

(11) **EP 4 016 443 A1**
(43) Date of publication of application: **22.06.2022**
(21) Application number: 19944759.0
(22) Date of filing: 09.10.2019
(51) Int. Cl.: G06T 3/40

(54) **SUPER-RESOLUTION PROCESSING METHOD FOR IMAGE, SYSTEM AND DEVICE**

(30) Priority: 10.09.2019 CN 201910852583
(71) Applicant: Wangsu Science & Technology Co., Ltd., Shanghai 200030 (CN)
(72) Inventor: ZHANG, Xia, Shanghai 200030 (CN)
(74) Representative: De Arpe Tejero, Manuel
(86) International application number: PCT/CN2019/110157
(87) International publication number: WO 2021/046953

(57) **Abstract**

The present disclosure discloses an image super-resolution processing method, system, and device. A plurality of image processing engines with different resolutions are provided, and the image processing engines include a general engine and a special engine. The method includes: obtaining a to-be-processed target image, and determining whether a target engine matched with the target image exists in the general engine according to a resolution of the target image; in response to the target engine exists, selecting the target engine to perform super-resolution processing on the target image; and in response to the target engine does not exist, preprocessing the resolution of the target image into an input resolution supported by the special engine, and selecting the special engine to perform super-resolution processing on the preprocessed target image. The technical solutions provided by the present disclosure can effectively perform super-resolution processing on most images.

## Description

### TECHNICAL FIELD

The present disclosure relates to the field of image processing technology, and more particularly, to an image super-resolution processing method, system, and device.

### BACKGROUND

With the rapid development of artificial intelligence, demands for super-resolution (SR) reconstruction have also increased significantly. For example, SR reconstruction of some old videos with lower resolution is required to meet demands for large-screen high-definition playback. In addition, resolutions of some high-definition pictures may likely be reduced during transmission due to limitation of network speed or bandwidth. After these pictures are transmitted to terminal devices, it is necessary to restore the original pictures with higher resolution for viewing. In some surveillance fields, there is also an urgent need to restore relatively fuzzy surveillance pictures to high-definition pictures.

At present, super-resolution models may be employed to perform super-resolution processing on images. To improve processing speed of the super-resolution models, TensorRT may be employed to decompose and amalgamate the super-resolution models to obtain image processing engines with a quicker processing speed. However, in most cases, the existing image processing engines limit resolutions of input images, which may lead to narrower applicability of the image processing engines, making it unable cope with various images in actual scenarios.

### SUMMARY

An objective of the present disclosure is to provide an image super-resolution processing method, system, and device, which can effectively perform super-resolution processing on most images.

To achieve the above objective, an aspect of the present disclosure provides an image super-resolution processing method. A plurality of image processing engines with different resolutions are provided, wherein the image processing engine includes a general engine and a special engine. The method includes: obtaining a to-be-processed target image, and determining whether a target engine matched with the target image exists in the general engine according to a resolution of the target image; in response to the target engine exists, selecting the target engine to perform super-resolution processing on the target image; and in response to the target engine does not exist, preprocessing the resolution of the target image into an input resolution supported by the special engine, and selecting the special engine to perform super-resolution processing on the preprocessed target image.

To achieve the above objective, another aspect of the present disclosure also provides an image super-resolution processing system. The system provides a plurality of image processing engines with different resolutions, wherein the image processing engines include a general engine and a special engine. The system includes an engine matching unit and a super-resolution processing unit. The engine matching unit is configured to obtain a to-be-processed target image, and determine whether a target engine matched with the target image exists in the general engine according to a resolution of the target image. The super-resolution processing unit is configured to: select, in response to the target engine exists, the target engine to perform super-resolution processing on the target image; and preprocess, in response to the target engine does not exist, the resolution of the target image into an input resolution supported by the special engine, and select the special engine to perform super-resolution processing on the preprocessed target image.

To achieve the above objective, yet another aspect of the present disclosure also provides an image super-resolution processing device, wherein the device includes a processor and a memory. The memory is configured to store a computer program, and the computer program is executable by the processor, whereby the above image super-resolution processing method is implemented.

As can be seen from the above, according to the technical solutions provided by one or more embodiments of the present disclosure, a plurality of image processing engines with different resolutions may be provided in advance. These different image processing engines may include a general engine and a special engine. Resolutions corresponding to the general engine may be relatively common image resolutions, for example, 480^{∗}640, 640^{∗}480, and 1080^{∗}1920. Resolutions corresponding to the special engine may be larger and/or less common image resolutions. For example, the special engine may correspond to a resolution of 2000^{∗}2000. After a to-be-processed target image is obtained, a resolution of the target image may be identified, and an attempt may be made to search for a target engine matched with the target image from the general engine according to the resolution identified. When the target engine can be searched, the target engine may be selected to perform super-resolution processing on the target image. However, when the general engine cannot meet the resolution of the target image, the special engine may be selected to perform super-resolution processing on the target image. An input resolution of the special engine is not common, and thus the resolution of the target image needs to be preprocessed into the input resolution of the special engine. In this way, the special engine may normally perform super-resolution processing on the preprocessed target image. As can be seen from the above technical solutions provided by the present disclosure, by providing a combination of the general engine and the special engine, super-resolution processing may be performed on most images, thereby improving the applicability of super-resolution processing.

### BRIEF DESCRIPTION OF THE DRAWINGS

To describe the technical solutions of embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic diagram showing steps of creating an image processing engine according to an embodiment of the present disclosure;
FIG. 2 is a schematic diagram of an image processing model according to an embodiment of the present disclosure;
FIG. 3 is a schematic diagram of an image processing model merged and deleted according to an embodiment of the present disclosure;
FIG. 4 is a schematic diagram of an image processing model further merged according to an embodiment of the present disclosure;
FIG. 5 is a schematic diagram of an image super-resolution processing method according to an embodiment of the present disclosure;
FIG. 6 is a schematic diagram of cropping a target image according to an embodiment of the present disclosure;
FIG. 7 is a schematic diagram of performing super-resolution processing on the target image according to an embodiment of the present disclosure; and
FIG. 8 is a schematic structural diagram of an image super-resolution processing device according to an embodiment of the present disclosure.

### DETAILED DESCRIPTION

To make the objectives, technical solutions, and advantages of the present disclosure clearer, the technical solutions of the present disclosure will be described clearly and completely below with reference to the embodiments and the corresponding accompanying drawings of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

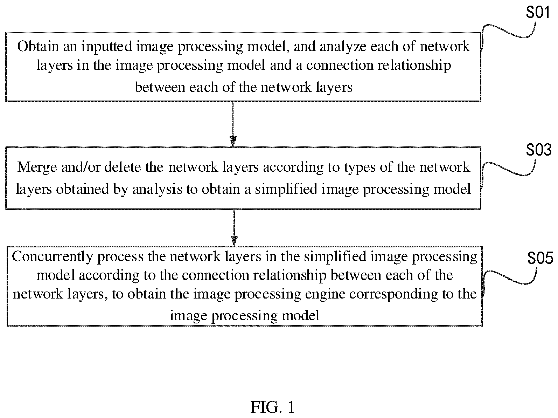

The present disclosure provides an image super-resolution processing method, which may provide a plurality of image processing engines with different resolutions in advance. Referring to FIG. 1, in practical applications, the image processing engine may be obtained in the following steps.

S01: obtaining an inputted image processing model, and analyzing each of network layers in the image processing model and a connection relationship between each of the network layers.

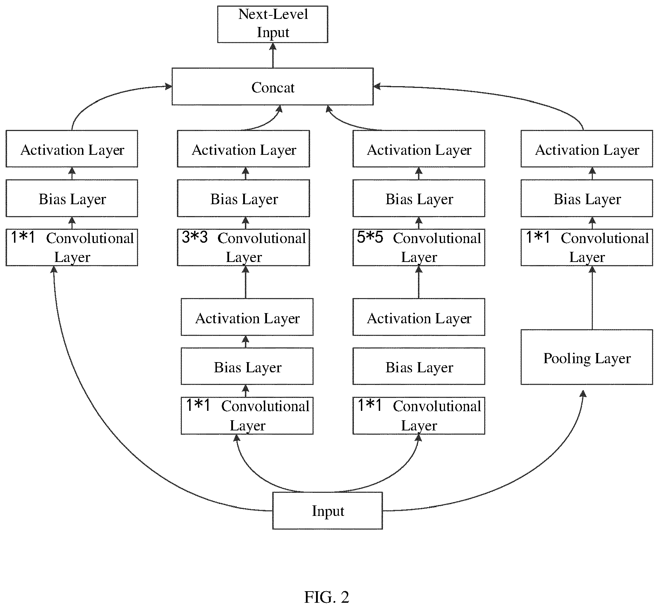

In this embodiment, the image processing model may be a model trained based on a large number of image training samples by means of a machine learning algorithm. In practical applications, the image processing model may include, for example, Super-Resolution Convolutional Neural Network (SRCNN), Fast SRCNN (FSRCNN), Efficient Sub-Pixel Convolutional Network (ESPCN), Deeply-Recursive Convolutional Network (DRCN), and so on. These image processing models generally may include network layers such as convolutional layers, activation layers, bias layers, pooling layers, fully-connected layers, and normalization layers. Different network layers may be connected in series or in parallel. For example, in the image processing model as shown in FIG. 2, input data are inputted through different branches and through the network layers such as the convolutional layer, the bias layer, the activation layer, and the pooling layer, and results obtained are concatenated together to serve as input of a next level.

In this embodiment, the above-mentioned image processing model may be analyzed by the TensorRT. Specifically, the above-mentioned image processing model may be inputted into the TensorRT. For the inputted image processing model, various network layers therein and a connection relationship between the various networks may be analyzed. For example, the image processing model as shown in FIG. 2 may include four branches connected in parallel, wherein in each of the four branches, the network layers are connected in series.

It is to be noted that in most cases the TensorRT has its own supporting formats. To enable the TensorRT to normally analyze the inputted image processing model, the inputted image processing model may be converted into a data format supported by the TensorRT. For example, the image processing model may be converted into uff, caffe or onnx formats.

S03: merging and/or deleting the network layers according to types of the network layers obtained by analysis to obtain a simplified image processing model.

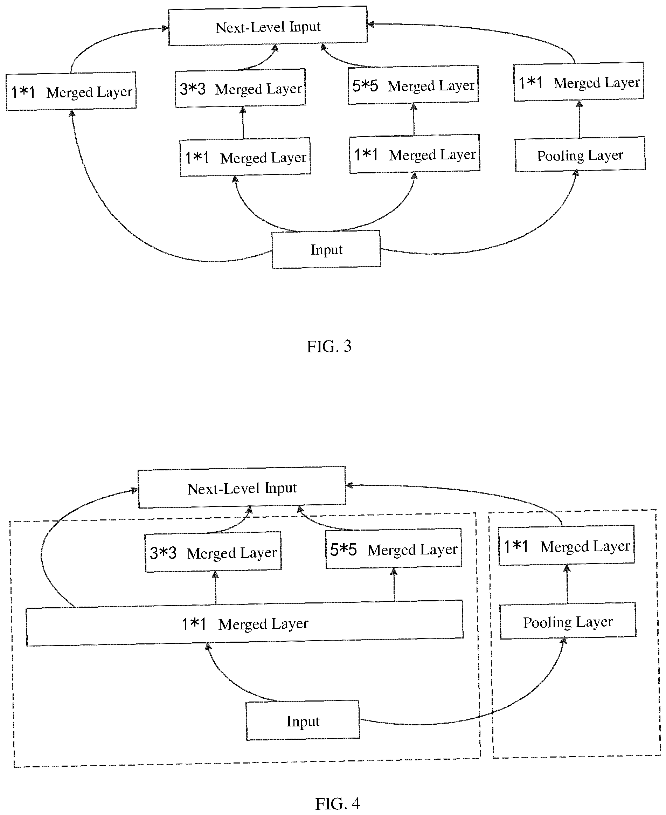

In this embodiment, when the network layers in the image processing model are working, generally interfaces are invoked. For example, when the image processing model runs on a Graphics Processing Unit (GPU), the convolutional layer, the bias layer and the activation layer need to invoke an interface of cuda CNN (cuDNN) for three times. But in fact, the above three layers may be merged together such that the interface is only invoked for once. In addition, the concat layer is not necessary in practical applications, so this layer may actually be eliminated. In view of this, after the types of the network layers are analyzed, to further simplify the image processing model and improve speed of image processing, the network layers may be merged and/or deleted. Specifically, the convolutional layer, the bias layer and the activation layer may be merged into one network layer, and the concat layer may be deleted. In this way, after the above-mentioned processing, a network structure as shown in FIG. 3 may be obtained. Further, three 1^{∗}1 merged layers may also be merged into one larger 1^{∗}1 merged layer, such that the network structure as shown in FIG. 4 is obtained.

S05: concurrently processing the network layers in the simplified image processing model according to the connection relationship between each of the network layers, to obtain the image processing engine corresponding to the image processing model.

In this embodiment, to further increase the speed of image processing, after the network layers are merged and/or deleted, the simplified image processing engine may be concurrently processed according to the connection relationship between each of the network layers. For example, in FIG. 4, two branches in two dashed box may be processed concurrently. Processing procedures in the two dashed boxes may be performed concurrently, thereby saving time of image processing and improving the speed of image processing.

In this embodiment, the image processing engine corresponding to the image processing model may be obtained after the steps of analyzing, merging, deleting, and concurrent processing on the network layers. Of course, in practical applications, to store the image processing engine, the image processing engine needs to be serialized. In the process of serialization, generally it is required to designate an input resolution of the image processing engine. In this way, after the serialization, the image processing engine can only process an image that meets the input resolution. Specifically, a resolution applicable to the image processing engine may be determined, and generally the resolution is determined manually according to actual requirements. Subsequently, the image processing engine may be serialized into a memory or a file according to the resolution determined. When the image processing engine needs to be used, data of the image processing engine may be deserialized from the memory or the file to the image processing engine, such that super-resolution processing may be performed by means of the image processing engine obtained by deserialization.

In one embodiment, after the image processing engine is obtained by analyzing for the same image processing model, the plurality of image processing engines with different resolutions may be serialized based on the same image processing model by inputting different resolutions during the serialization operation. The plurality of image processing engines with different resolutions obtained based on the same image processing model may be used as general engines. Resolutions corresponding to the general engines may be common image resolutions, for example, 480^{∗}640, 640^{∗}480, or 1080^{∗}1920. In this way, each of the general engines is obtained based on analysis of the same image processing model, such that the process of creating the general engines may be simplified, thereby improving efficiency of creating the general engines. Less common image resolutions may also be obtained by means of analysis based on the same image processing model. For example, the resolution may be set to 2000^{∗}2000 during serialization to obtain one special engine by means of serialization. However, when an image processing model is trained, in most cases image training samples used are a large number of general images. Therefore, when a plurality of different general engines are obtained based on the analysis of the same image processing model, it can be ensured that different general engines can normally process the general images. However, input resolutions of the special engine are not very common, so the image processing model may likely be unable to efficiently process such less common images, which may result in a fact that the special engine obtained based on analysis of the same image processing mode may likely have a lower image processing speed. In view of this, when the special engine obtained based on analysis of the same image processing mode is performing super-resolution processing, if the processing speed is lower than a designated speed threshold, the same image processing model may be discarded, and a training process of the image processing model may be performed separately for the special engine to obtain another image processing model. The aforementioned designated speed threshold may be flexibly set based on historical experiences, for example, set to 50ms.

In this embodiment, when the training process of the image processing model is performed separately for the special engine, an image training sample matched with the input resolution supported by the special engine may be obtained, and according to a machine learning algorithm, a new image processing model may be obtained by training on the basis of the obtained image training sample. Subsequently, the special engine may be obtained by analyzing according to the new image processing model. In this way, the image training sample is changed, such that the special engine can efficiently process the less common images.

In one embodiment, if one or more engines need to be selected for image processing, an instantiated object (context) may be created for each engine. The instantiated object may allocate resources required for the engine in the image processing process, such as required GPU ratio, memory size occupied or the like, to ensure that the engine can normally complete the process of super-resolution processing.

In practical applications, each image processing engine needs to occupy a temporary cache when performing super-resolution processing. Generally, a system has a fixed total cache. The more temporary caches the image processing engine occupies, the fewer the number of image processing engines operating concurrently. In view of this, in one embodiment, when a temporary video memory is allocated for each image processing engine, the temporary video memory may be set as a minimum video memory that meets working requirements of the image processing engine. In this way, it may be ensured that the number of image processing engines operating concurrently is maximized, and thus overall efficiency of super-resolution processing can be improved.

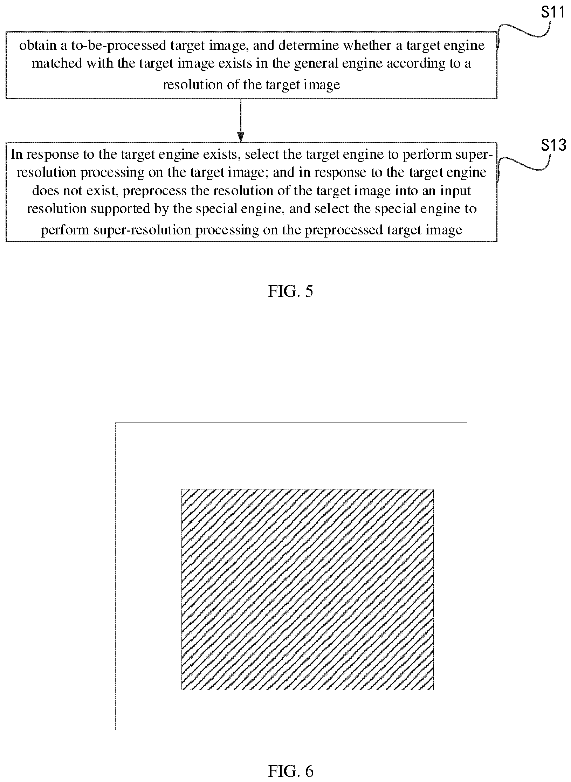

In the present disclosure, the general engine and the special engine mentioned above may be created before the super-resolution processing. After these image processing engines are provided, referring to FIG. 5, the image super-resolution processing method may include following steps.

S11: obtaining a to-be-processed target image, and determining whether a target engine matched with the target image exists in the general engine according to a resolution of the target image.

In this embodiment, when the to-be-processed target image is obtained, the resolution of this target image may be identified. Generally, this resolution may correspond to a length and a width of the target image (the length and the width represent units of the resolution). For example, for a target image having a resolution of 480^{∗}640, its length may be 480 and its width may be 640. After the resolution of the target image is identified, this resolution may be compared with a resolution corresponding to each general engine to determine whether there exists a target engine matched with the target image.

In practical applications, the length and the width of the target image may be compared with a length and a width of the resolution of each general engine in sequence. Of course, in the comparison process, only the length of the target image is compared with the length of the resolution of the general engine, and the width of the target image is compared with the width of the resolution of the general engine. If the length and the width of the target image are respectively less than or equal to the length and the width of the resolution of a certain general engine, it may be determined that the resolution of this general engine covers the resolution of the target image. However, if either of the length or the width of the target image is greater than the length or the width of the resolution of a general engine, it may be determined that the resolution of this general engine does not cover the resolution of the target image. For example, if the resolution of the target image is 480^{∗}640, for a general engine having a resolution of 1080^{∗}1920, the resolution of this general engine covers the resolution of the target engine; however, for a general engine having a resolution of 640^{∗}480, the length of the resolution of this general engine is greater than the length of the target image, but the width of the resolution of this general engine is smaller than the width of the target image, and thus the resolution of this general engine does not cover the resolution of the target image.

In one embodiment, the resolution corresponding to each general engine may be identified, and it may be determined whether there exists, among the general engines, a candidate engine whose resolution covers the resolution of the target image. If there exists such a candidate engine, the candidate engine having a minimum resolution may serve as the target engine matched with the target image. An objective of such processing is to ensure that the resolution corresponding to the target engine best fits the resolution of the target image, thereby facilitating the subsequent super-resolution processing. If the aforementioned candidate engine does not exist in the general engines, it may be determined that there is no target engine matched with the target image in the general engines.

S13: in response to the target engine exists, selecting the target engine to perform super-resolution processing on the target image; and in response to the target engine does not exist, preprocessing the resolution of the target image into an input resolution supported by the special engine, and selecting the special engine to perform super-resolution processing on the preprocessed target image.

In this embodiment, when there exists a target engine matched with the target image, this target engine may be selected to perform super-resolution processing on the target image. In practical applications, if the resolution of the target image is consistent with the input resolution of the target engine, the target image may be directly inputted into the target engine for processing. However, if the resolution of the target image is less than the input resolution of the target engine, the target image may be preprocessed to convert the target image into an image meeting the input resolution of the target engine. Specifically, a reconstructed image containing the target image may be constructed. A resolution of the reconstructed image may be consistent with the resolution corresponding to the target engine. The reconstructed image may include two regions, i.e., a region occupied by the target image, and another region filled by pixels with designated pixel values. In this way, in the reconstructed image, all regions other than the target image may be filled by the pixels with designated pixel values. In practical applications, to distinguish images in the two regions subsequently, the above designated pixel value may be 0. Of course, as application scenario changes, the designated pixel values may also change accordingly. For example, the designated pixel values may be numerical values representing green, such that a green region may be cut out using a cutout technology subsequently, to obtain the region corresponding to the required target image.

In this embodiment, the reconstructed image may be directly inputted into the target engine for super-resolution processing. The processed super-resolution image may include the region corresponding to the target image and also the region filled by the pixels with designated pixel values. Subsequently, an effective region corresponding to the target image may be extracted from the super-resolution image, and the effective region may be used as an image obtained after super-resolution processing of the target image. Specifically, when extracting the effective region, a region formed by the designated pixel values may be identified from the super-resolution image, and this region is filtered out. In this way, the effective region corresponding to the target image may be extracted. In addition, an obvious edge may be identified from the super-resolution image by means of an edge identification technology, such that two regions divided by the edge may be separated, and a non-monochromatically filled region of the two regions may be used as the effective region corresponding to the target image.

In one embodiment, if there is no target engine matched with the target image among the general engines, a special engine may be selected to perform super-resolution processing on the target image. The input resolution of the special engine is rare, and thus the resolution of the target image generally is inconsistent with the input resolution of the special engine. At this moment, the resolution of the target image needs to be preprocessed to be the input resolution supported by the special engine, such that the special engine may be selected to perform super-resolution processing on the preprocessed target image.

In practical applications, the preprocessing of the target image may include a variety of ways. For example, in one embodiment, interpolation operation may be performed on the target image by means of an image interpolation technology, such that the target image is converted into an interpolated image keeping consistent with the input resolution of the special engine. Specifically, the interpolation operation of the target image may be implemented according to a nearest neighbor interpolation method, a bilinear interpolation method, or a cubic convolution method. After the interpolated image is obtained, super-resolution processing may be performed on the interpolated image by means of the special engine, to obtain a super-resolution image corresponding to the interpolated image. This super-resolution image actually corresponds to the interpolated image instead of the target image. Therefore, after the super-resolution image corresponding to the interpolated image is obtained, the super-resolution image needs to be restored to obtain the super-resolution image corresponding to the target image. Specifically, the process of restoring the super-resolution image may be opposite to the process of the interpolation operation. The super-resolution image corresponding to the interpolated image may be restored with reference to an interpolation coefficient in the process of the interpolation operation, to obtain the super-resolution image corresponding to the target image. For example, in the nearest neighbor interpolation method, a transformation matrix between the target image and the interpolated image may be determined, wherein the transformation matrix may be used as the interpolation coefficient. After the super-resolution image corresponding to the interpolated image is obtained, an operation may be executed on the super-resolution image and an inverse matrix of the transformation matrix, to restore the super-resolution image corresponding to the target image. Of course, as algorithms used in the interpolation operation may be different, the interpolation coefficient may also be different, which is not to be enumerated here.

In another embodiment, in response to the input resolution of the special engine covers the resolution of the target image, a reconstructed image that includes the target image may be constructed with reference to a method of the general engine wherein the resolution of the reconstructed image keeps consistent with the input resolution of the special engine, and regions of the reconstructed image other than the target image are filled by the pixels of designated pixel values. Subsequently, after super-resolution processing is performed on the reconstructed image by the special engine, an effective region corresponding to the target image may be extracted from the super-resolution image, and the effective region is used as an image obtained after super-resolution processing of the target image.

Reference may be made to the steps of the general engine for the construction of the reconstructed image and the extraction of the effective region, detailed descriptions thereof are omitted here.

In another embodiment, in response to the resolution of the target image covers the input resolution of the special engine, the target image may be cropped to obtain a cropped image consistent with the input resolution of the special engine. In practical applications, when cropping the target image, in order not to omit main contents of the target image, a characteristic target in the target image may be identified, and the target image may be cropped into a cropped image containing the characteristic target. In this way, in the cropped image, the original main contents in the target image are not omitted. A resolution of the cropped image may also keep consistent with the input resolution of the special engine, such that super-resolution processing may be performed on the cropped image directly using the special engine.

In practical applications, when identifying the characteristic target in the target image, according to principles of human vision, an object to which human eyes pay attention may be taken as the characteristic target of the target image. Subsequently, the target image may be cropped by centering on the characteristic target. Specifically, referring to FIG. 6, after the target image is cropped based on recognition of the characteristic target, the cropped image (shadowed part) and remaining image (blank part) may be obtained. The cropped image may be inputted into the special engine for super-resolution processing, to obtain a super-resolution image corresponding to the cropped image. To restore contents of the original target image, a resolution ratio between the super-resolution image and the cropped image may be determined, and the region (i.e., the remaining image) of the target image other than the cropped image may be scaled according to the resolution ratio. In this way, the region of the remaining image scaled may keep consistent in size with the super-resolution image corresponding to the cropped image. By stitching the scaled region and the super-resolution image corresponding to the cropped image together, all the contents of the target image may be restored. In this way, the image obtained after the super-resolution processing of the target image may be obtained. It's nothing but in this image, only the region corresponding to the cropped image is subjected to the super-resolution processing, and other regions are only scaled without the super-resolution processing. Advantages of such processing lie in that the region to which the human eyes pay attention may have a higher resolution, but a region to which the human eyes pay no attention does not need to have a higher resolution. In this way, effect of the super-resolution processing is achieved, and data size of the super-resolution processing is reduced, and thus efficiency of the super-resolution processing is improved.

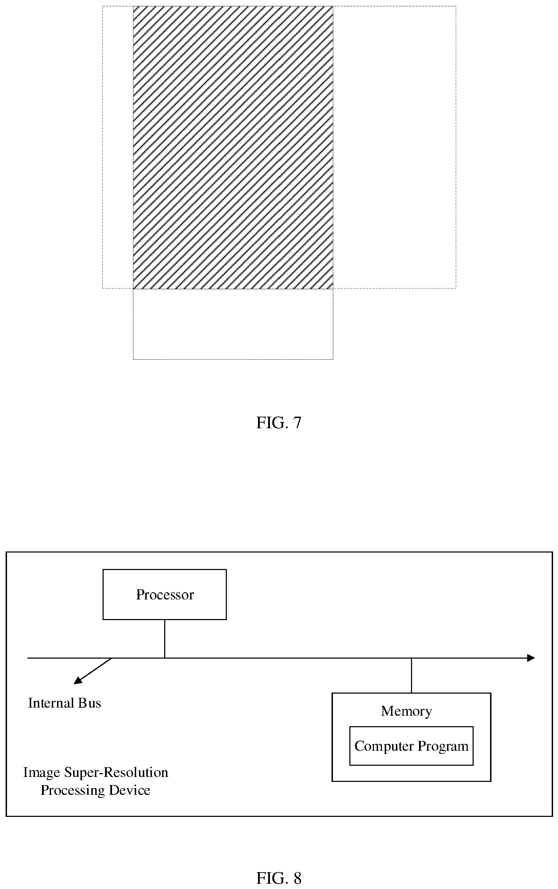

Of course, in practical applications, for the processing process of the special engine, the above-mentioned three methods of interpolation operation, filling by the designated pixel values, and cropping may be used in combination. For example, in FIG. 7, the region limited by solid lines is the target image, and the region limited by dashed lines is the input resolution of the special engine. As can be seen, a part of the target image exceeds the range supported by the special engine, but the remaining parts of the target image cannot fill the range supported by the special engine. In this case, a cropped image as shown by the shadow may be obtained by cropping the target image. Next, the cropped image may be subjected to the interpolation operation or may be filled by the designated pixel values, such that the resolution of the cropped image is converted into the input resolution of the special engine. Subsequently, after the super-resolution processing by the special engine, the effective region of the super-resolution image obtained may be extracted (or restored according to the interpolation coefficient), and then the remaining regions may be stitched. In this way, the super-resolution image corresponding to the target image may be obtained.

The present disclosure also provides an image super-resolution processing system. The system provides a plurality of image processing engines with different resolutions, wherein the image processing engines include general engines and special engines. The system includes:
an engine matching unit, configured to obtain a to-be-processed target image, and determine whether a target engine matched with the target image exists in the general engine according to a resolution of the target image; and
a super-resolution processing unit, configured to: select, in response to the target engine exists, the target engine to perform super-resolution processing on the target image; and preprocess, in response to the target engine does not exist, the resolution of the target image into an input resolution supported by the special engine, and select the special engine to perform super-resolution processing on the preprocessed target image.

Referring to FIG. 8, the present disclosure also provides an image super-resolution processing device. The device includes a processor and a memory, wherein the memory is configured to store a computer program, and the computer program is executable by the processor, whereby the image super-resolution processing method may be implemented.

In this embodiment, the memory may include a physical unit configured to store information, which is generally digitized and then stored in a medium using electrical, magnetic, or optical methods. The memory described in this embodiment may also include: a device configured to store information by means of electrical energy, such as RAM or ROM; a device configured to store information by means of magnetic energy, such as hard disk, floppy disk, magnetic tape, magnetic core memory, magnetic bubble memory, or U disk; and a device configured to store information using optical means, such as CD or DVD. Of course, there are other types of memories, such as quantum memories or graphene memories.

In this embodiment, the processor may be implemented in any suitable manner. For example, the processor may take the form of, for example, a microprocessor or a processor, and a computer-readable medium storing computer-readable program codes (for example, software or firmware) executable by the (micro)processor, logic gates, switches, application specific integrated circuits (ASICs), programmable logic controllers and embedded microcontrollers, etc.

As can be seen from the above, according to the technical solutions provided by one or more embodiments of the present disclosure, a plurality of image processing engines with different resolutions may be provided in advance. These different image processing engines may include a general engines and a special engine. Resolutions corresponding to the general engine may be relatively common image resolutions, for example, 480^{∗}640, 640^{∗}480, and 1080^{∗}1920. Resolutions corresponding to the special engine may be larger and/or less common image resolutions. For example, the special engine may correspond to a resolution of 2000^{∗}2000. After a to-be-processed target image is obtained, a resolution of the target image may be identified, and an attempt may be made to search for a target engine matched with the target image from the general engine according to the resolution identified. When the target engine can be searched, the target engine may be selected to perform super-resolution processing on the target image. However, when the general engine cannot meet the resolution of the target image, the special engine may be selected to perform super-resolution processing on the target image. An input resolution of the special engine is not common, and thus the resolution of the target image needs to be preprocessed into the input resolution of the special engine. In this way, the special engine may normally perform super-resolution processing on the preprocessed target image. As can be seen from the above technical solutions provided by the present disclosure, by providing a combination of the general engine and the special engine, super-resolution processing may be performed on most images, thereby improving the applicability of super-resolution processing.

The various embodiments in this specification are described in a progressive manner, and the same or similar parts between the various embodiments can be referred to each other, and each embodiment focuses on the differences from other embodiments. In particular, for the system and device embodiments, both can be explained with reference to the introduction of the foregoing method embodiments.

Those skilled in the art should realize that the embodiments of the present disclosure may be provided as a method, a system or a computer program product. Therefore, the present disclosure may use forms of a full hardware embodiment, a full software embodiment, or an embodiment in combination of software and hardware aspects. Furthermore, the present disclosure may use forms of computer program products implemented on one or more computer storage media (including but not limited to a magnetic disk memory, a CD-ROM, an optical memory or the like) which includes a computer program code.

The present disclosure is described with reference to flowcharts and/or block diagrams according to the method, device (system) and a computer program product of the embodiments of the present disclosure. It is to be understood that each flow and/or block in the flowchart and/or block diagram as well as combination of flow and/or block in the flowchart and/or block diagram may be realized by computer program instructions. These computer program instructions may be provided to a general purpose computer, a special purpose computer, an embedded processor or processors of other programmable data processing equipment so as to generate a machine such that such a device configured to achieve functions designated in one or more flows of the flowchart and/or in one or more blocks of the block diagram is generated by means of instructions executed by computers or processors of other programmable data processing equipment.

These computer program instructions may be stored in a computer-readable memory which may lead a computer or other programmable data processing equipment to work in a particular way such that instructions stored in the computer-readable memory may generate a manufactured product comprising a command device which may achieve functions designated in one or more flows of the flowchart and/or in one or more blocks of the block diagram.

These computer program instructions may also be loaded onto computers or other programmable data processing equipment such that a series of operation steps are executed on the computers or other programmable equipment to generate a processing achieved by computers, thus providing steps for achieving functions designated in one or more flows of the flowchart and/or in one or more blocks of the block diagram by means of instructions executed by computers or other programmable equipment.

In a typical configuration, a computing device includes one or more CPUs, input-output interfaces, network interfaces and memories.

The memory may include a volatile memory in a computer-readable medium, a random access memory (RAM) and/or a non-volatile memory, such as a read-only memory (ROM) or a flash RAM. The memory is an example of a computer-readable medium.

The computer-readable medium includes a non-volatile medium, a volatile medium, a mobile medium or an immobile medium, which may implement information storage by means of any method or technology. Information may be a computer-readable instruction, a data structure, a module of a program, or other data. Examples of computer storage media include but are not limited to a phase change random access memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a compact disc-read only memory (CD-ROM), a digital versatile disc (DVD) or other optical memories, a cartridge magnetic tape, a magnetic tape or magnetic disk memory or other magnetic storage devices or any other non-transmission media, which may be configured to store information that may be accessed by a computing device. As defined herein, computer-readable media do not include transitory media, for example, modulated data signals and carriers.

Furthermore, terms such as "comprise", "include" or other variants thereof are intended to cover a non-exclusive "comprise" such that a process, a method, a merchandise or a device comprising a series of elements not only includes these elements, but also includes other elements not listed explicitly, or also includes inherent elements of the process, the method, the merchandise or the device. In the case of no more restrictions, elements restricted by a sentence "include a ......" do not exclude the fact that additional identical elements may exist in a process, a method, a merchandise or a device of these elements.

The embodiments described above are only illustrated as embodiments of the present disclosure, and are not intended to limit the present disclosure. To those skilled in the art, various modifications and variations may be made to the present disclosure. All modifications, equivalent substitutions, improvements and so on made within the spirit and principle of the present disclosure shall fall within the protection scope of the claims of the present disclosure.

## Claims

1. An image super-resolution processing method, wherein a plurality of image processing engines with different resolutions are provided, the image processing engines comprising a general engine and a special engine, the method comprising:
obtaining a to-be-processed target image, and determining whether a target engine matched with the target image exists in the general engine according to a resolution of the target image; and
in response to the target engine exists, selecting the target engine to perform super-resolution processing on the target image; and in response to the target engine does not exist, preprocessing the resolution of the target image into an input resolution supported by the special engine, and selecting the special engine to perform super-resolution processing on the preprocessed target image.

2. The method according to claim 1, wherein the image processing engine is obtained by:
obtaining an inputted image processing model, and analyzing each of network layers in the image processing model and a connection relationship between each of the network layers;
merging and/or deleting the network layers according to types of the network layers obtained by analysis to obtain a simplified image processing model; and
concurrently processing the network layers in the simplified image processing model according to the connection relationship between each of the network layers, to obtain the image processing engine corresponding to the image processing model.

3. The method according to claim 2, wherein after obtaining the image processing engine corresponding to the image processing model, the method further comprises:
determining a resolution applicable to the image processing engine, and serializing the image processing engine into a memory or file according to the resolution determined, wherein when the image processing engine needs to be used, data of the image processing engine are deserialized into the image processing engine from the memory or the file.

4. The method according to claim 2 or 3, wherein each of the general engines is obtained based on analysis of the same image processing mode; if a processing speed is less than a designated speed threshold when the special engine obtained based on analysis of the same image processing mode performs super-resolution processing, an image training sample matched with the input resolution supported by the special engine is obtained, and after a new image processing model is obtained by training according to the image training sample, the special engine is obtained based on analysis of the new image processing model.

5. The method according to claim 1, wherein each of the image processing engines is allocated with a temporary video memory during a working process, wherein the temporary video memory is a minimum video memory meeting a working requirement of the image processing engine.

6. The method according to claim 1, wherein the determining whether a target engine matched with the target image exists in the general engine comprises:
identifying a resolution corresponding to each of the general engines, and determining whether candidate engines whose resolutions cover the resolution of the target image exists among the general engines; in response to the candidate engines exist, taking a candidate engine having a minimum resolution as the target engine matched with the target image; in response to no candidate engine exists, determining that there is no target engine matched with the target image among the general engines.

7. The method according to claim 1, wherein the selecting the target engine to perform super-resolution processing on the target image comprises:
in response to a resolution corresponding to the target engine is higher than the resolution of the target image, constructing a reconstructed image comprising the target image, wherein a resolution of the reconstructed image keeps consistent with the resolution corresponding to the target engine, and regions except the target image in the reconstructed image are filled with pixels having a designated pixel value; and
after super-resolution processing is performed on the reconstructed image using the target engine, extracting an effective region corresponding to the target image from the processed super-resolution image, and taking the effective region as an image obtained after the super-resolution processing is performed on the target image.

8. The method according to claim 1, wherein the preprocessing the resolution of the target image into an input resolution supported by the special engine comprises:
in response to the input resolution of the special engine covers the resolution of the target image, constructing a reconstructed image comprising the target image, wherein a resolution of the reconstructed image keeps consistent with the input resolution of the special engine, and regions except the target image in the reconstructed image are filled with pixels having a designated pixel value.

9. The method according to claim 8, wherein the selecting the special engine to perform super-resolution processing on the preprocessed target image comprises:
after super-resolution processing is performed on the reconstructed image using the target engine, extracting an effective region corresponding to the target image from the processed super-resolution image, and taking the effective region as an image obtained after the super-resolution processing is performed on the target image.

10. The method according to claim 1, wherein the preprocessing the resolution of the target image into an input resolution supported by the special engine comprises:
in response to the resolution of the target image covers the input resolution of the special engine, identifying a characteristic target in the target image, and cropping the target image into a cropped image comprising the characteristic target, wherein a resolution of the cropped image keeps consistent with the input resolution of the special engine.

11. The method according to claim 10, wherein the selecting the special engine to perform super-resolution processing on the preprocessed target image comprises:
performing super-resolution processing on the cropped image using the special engine to obtain a super-resolution image corresponding to the cropped image;
determining a resolution ratio between the super-resolution image and the cropped image, and scaling a region of the target image except the cropped image according to the resolution ratio; and
stitching the scaled region and the super-resolution image together to obtain an image obtained after super-resolution processing is performed on the target image.

12. The method according to claim 1, wherein the preprocessing the resolution of the target image into an input resolution supported by the special engine comprises:
performing an interpolation operation on the target image to convert the target image into an interpolated image keeping consistent with the input resolution of the special engine;
the selecting the special engine to perform super-resolution processing on the preprocessed target image comprises:
performing super-resolution processing on the interpolated image using the special engine to obtain a super-resolution image corresponding to the interpolated image; and
performing restoration processing on the super-resolution image corresponding to the interpolated image according to an interpolation coefficient in the interpolation operation, to obtain the super-resolution image corresponding to the target image.

13. An image super-resolution processing system, wherein the system provides a plurality of image processing engines with different resolutions, the image processing engines comprise a general engine and a special engine, and the system comprises:
an engine matching unit, configured to obtain a to-be-processed target image, and determine whether a target engine matched with the target image exists in the general engine according to a resolution of the target image; and
a super-resolution processing unit, configured to: select, in response to the target engine exists, the target engine to perform super-resolution processing on the target image; and preprocess, in response to the target engine does not exist, the resolution of the target image into an input resolution supported by the special engine, and select the special engine to perform super-resolution processing on the preprocessed target image.

14. An image super-resolution processing device, comprising a processor and a memory, wherein the memory is configured to store a computer program, and the computer program is executable by the processor, whereby the method according to any one of claims 1 to 12 is implemented.
